# EUROPEAN PATENT APPLICATION

(11) **EP 4 422 089 A1**
(43) Date of publication of application: **28.08.2024**
(21) Application number: 23275027.3
(22) Date of filing: 22.02.2023
(51) Int. Cl.: H04B 10/118

(54) **WAVELENGTH DIVISION MULTIPLEXED SPACE OPTICAL COMMUNICATIONS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A transmitter 200 is configured to transmit a multiplexed optical signal 235. The transmitter 200 includes at least one optical signal generator 210 configured to generate at least one optical signal 215, a modulator 220 configured to encode data onto the at least one optical signal 215, and a multiplexer 230 configured to combine the at least one optical signal 215 into a multiplexed optical signal 235. A receiver 300 is configured to receive a multiplexed optical signal 390. The receiver 300 comprises a de-multiplexer 330 configured to separate the multiplexed optical signal 390 into at least one optical signal 335, an opto-electronic element 370 configured to convert the at least one optical signal 335 into at least one electrical signal, and a demodulator 320 configured to decode the at least one electrical signal. Also described herein is a system 100 comprising the transmitter 200 and receiver 300 apparatuses, and methods of transmitting 400 and receiving 500 an optical signal, for example, using the transmitter 200 and receiver 300 apparatuses.

## Description

### FIELD

The present invention relates to transmitter and receiver apparatuses and methods of use thereof. The transmitter-receiver system provides an optical signal communication link. This communication method may be applied between a satellite and a ground station; between a first satellite and a second satellite; and between a ground station and a satellite This technology has the capability to improve the capacity and reliability of space-to-space, space-to-ground, and ground-to-space optical communications links.

### BACKGROUND

Space-to-ground and vehicle-to-vehicle communications traditionally use wavelengths in the radio frequency (RF) domain. The bandwidth of these signals is limited by the carrier bandwidth of the RF signal used, and the amount of crosstalk that can occur between signals utilising the same or substantially similar RF bands. Such bandwidth limitations restrict the amount of information which can be transferred from space down to the ground, from the ground up to space, or between multiple vehicles in space. For example, high frame rate data streams, such as video feeds, cannot be supported by existing RF systems.

Existing RF systems may also suffer from poor-quality data transfer. In addition, RF signals pose a higher risk of being jammed, thereby reducing the covertness of the information being transmitted. Optical communications do not suffer from the same limitations because the signal footprint can be restricted and because the carrier frequency is approximately three orders of magnitude higher than an equivalent RF signal.

Recently, space-to-ground optical communications have been developed; for example, Tesat's TOSIRIS (Optical Space Infrared Downlink System). However, for low earth orbit (LEO) satellites, full use of the bandwidth offered by the carrier frequency is not possible because atmospheric turbulence affects the achievable bandwidth at lower elevations.

Therefore, there is a need to increase the bandwidth of optical communications systems used for satellite communication to allow more information content to be communicated.

### SUMMARY

Optical fibre communications technology has developed to multiplex multiple different wavelengths together in parallel. Wavelength division multiplexing (WDM) is a technique that allows each wavelength to be configured to carry a different piece of information. This approach allows an overall bandwidth total to the sum of the bandwidths available for each of the individual wavelength channels. The individual channels can then be multiplexed onto a single fibre optic cable via a dispersive element. A dispersive element may be an arrayed waveguide grating or a simple fibre coupler. Many of the components for 1.5µm WDM systems already exist for optical fibre communications.

At a receiver, each of the wavelength channels may be de-multiplexed in a similar way. De-multiplexing the received optical signal may require the use of suitable optical filters to avoid crosstalk between the different wavelengths comprised within the multiplexed optical signal. The de-multiplexed wavelengths may further require focusing onto separate photodiodes for opto-electronic conversion.

Each of the multiple channels possesses a different wavelength. The individual wavelength channels must be sufficiently separated to prevent crosstalk upon being received by the receiver. This separation may be, for example, 100GHz. Each wavelength channel is individually modulated so that they may each carry a different piece of information or data. This effectively increases the overall bandwidth of the communication link. This may allow faster transfer of data packets, the transfer of larger data packets, and improved reliability of the communication link. The use of a narrow beam with multiple wavelengths may further reduce the likelihood of successful signal jamming. In some cases, multiple channels may be configured to carry the same piece of information or data for the sake of redundancy. The multiplexed wavelength channels are then separated at the receiver. This may be achieved using couplers which are configured to split the combined energy using filters configured to separate the individual wavelengths. Alternatively, the separation may be achieved using dispersive elements, such as arrayed waveguide gratings. These are configured to spatially separate and filter the individual wavelengths in one device and reduce loss of signal power.

Each of the separated wavelengths then is received by a separate opto-electronic converter to convert the optical signal into an electrical signal. The converted electrical signal is then demodulated to generate the information or data sent by the transmitter. Higher levels of the open systems interconnection (OSI) stack break down the data into the individual wavelength channels and reassemble it at the receiver. It may also be possible to vary the bit rate on individual channels to deal with varying conditions and the achievable bandwidth. This may be necessary when an individual optical signal generator, such as a laser, ages and its power drops. Reductions in signal power may also be attributed to changes in environmental or geometric conditions. In this case, it may be necessary to reduce its bandwidth.

In order to provide power for the link budget, power amplification of the multiplexed optical signal may be applied prior to transmission. Similarly, pre-amplification may be applied upon receiving the transmitted multiplexed optical signal. It is possible for the multiplexed wavelengths to be individually amplified by the same amplifying device. The amplifier may use fibre amplifiers such as the Erbium-doped fibre amplifier (EDFA) for 1.5 µm and Ytterbium-doped fibre amplifier (YDFA).

The system may allow for asymmetrical data transfer. For example, the uplink data transfer from the ground station to the satellite may be a small amount of data for control of the satellite. In contrast, the downlink data transfer from the satellite to the ground station may comprise large amounts of data. In this case, costs may be reduced by providing fewer wavelength channels on the ground station.

Wavelength division multiplexing (WDM) could provide futureproofing of satellites. For example, if a satellite is likely to be re-tasked with a different mission at a later time, more channels could be utilised. This could reduce the up-front costs associated with building the satellite without reducing final capability. This would not be possible on the satellite without a space mission to upgrade it, therefore, it may be preferable to design it for full capability at the outset. In some cases, an upgrade mission may not be feasible or possible due to the orbit of the satellite. However, it would normally be expected the downlink will not require less bandwidth than the uplink.

According to a first aspect of the present invention, there is provided an apparatus for transmitting an optical signal. The apparatus comprises an optical signal generator, configured to generate at least one optical signal. The apparatus further comprises a modulator, configured to encode data onto the at least one optical signal. The apparatus further comprises a multiplexer, configured to combine the at least one optical signal into a multiplexed optical signal. The apparatus may further comprise at least one optical element configured to condition and direct the multiplexed optical signal. The apparatus may further comprise at least one amplifier configured to amplify the transmitted multiplexed optical signal. The optical signal may be communicated between components of the apparatus via a fibre optic cable, or through free space. The optical signal generator may be a laser and the at least one optical signal may be at least one laser signal. The laser signal may be an infrared laser signal with a wavelength substantially between 700 nm to 10 µm.

According to a second aspect of the present invention, there is provided an apparatus for receiving an optical signal. The apparatus comprises a de-multiplexer, configured to separate the multiplexed optical signal into at least one optical signal. The apparatus further comprises an opto-electronic element, configured to convert the at least one optical signal into at least one electrical signal. The apparatus further comprises a de-modulator, configured to decode the at least one electrical signal. The apparatus may further comprise at least one optical element configured to focus the received multiplexed optical signal. The apparatus may further comprise at least one amplifier configured to amplify the received multiplexed optical signal. The apparatus may further comprise at least one optical filter. The optical signal may be communicated between components of the apparatus via a fibre optic cable, or through free space. The optical signal generator may be a laser and the at least one optical signal may be at least one laser signal. The laser signal may be an infrared laser signal with a wavelength substantially between 700 nm to 10 µm.

According to a third aspect of the present invention is a system comprising the transmitter and receiver apparatuses. The system may involve transmission of a multiplexed optical signal from the transmitter to the receiver through the medium of free space. The system may comprise a satellite and ground station, wherein both the satellite and ground station each comprise a transmitter apparatus and a receiver apparatus. The system may comprise a first satellite in an orbit comprising a transmitter, and a second satellite in an orbit comprising a receiver. The first satellite may be configured to transmit a multiplexed optical signal to the second satellite.

According to a fourth aspect of the present invention is a method of transmitting an optical signal. The method comprises the step of generating at least one optical signal. The method further comprises the step of modulating the at least one optical signal. The method further comprises the step of multiplexing the at least one optical signal to generate a multiplexed optical signal. The method further comprises the step of transmitting the multiplexed optical signal through free space to a receiver. The multiplexed optical signal may be transmitted from a satellite in an orbit to be received by a ground station receiver, whereby the signal passes through free space from the transmitter to the receiver. The at least one optical signal may be at least one laser signal. The at least one laser signal may be an infrared laser signal with a wavelength substantially between 700 nm to 10 µm. The method may further comprise the step of conditioning and directing the multiplexed optical signal. The method may further comprise the step of amplifying the multiplexed optical signal.

According to a fifth aspect of the present invention is a method of receiving an optical signal. The method comprises the steps of receiving a multiplexed optical signal, de-multiplexing the optical signal into at least one optical signal, de-modulating the at least one optical signal, and converting the at least one optical signal into at least one electrical signal. The method may further comprise the step focusing the received multiplexed optical signal prior to being de-multiplexed. The method may further comprise the step of amplifying the received multiplexed optical signal. The method may comprise passing the at least one de-multiplexed optical signal through an optical filter. The at least one optical signal may be an infrared laser signal with a wavelength substantially between 700 nm to 10 µm.

The described methods above may be applicable between a satellite in an orbit and a ground station or equivalent receiving station. The multiplexed optical signal may be transmitted from at satellite in an orbit to the ground station via at least one intermediary satellite, for example, where the first station does not have a clear line of sight with the receiving ground station. The at least one optical signal may be an infrared laser signal with a wavelength substantially between 700 nm to 10 µm.

### BRIEF DESCRIPTION OF THE FIGURES

Embodiments of the invention will now be described by way of example only with reference to the figures, in which:
Figure 1 shows a schematic of space-to-ground and ground-to-space optical communication link, according to an embodiment the invention;
Figure 2 is a block diagram of an example embodiment of a transmitter;
Figure 3 is a block diagram of an example embodiment of a receiver;
Figure 4 is a flowchart for a method of transmitting an optical signal, according to an embodiment the present invention; and
Figure 5 is a flowchart for a method of receiving an optical signal, according to an embodiment of the present invention.

### DETAILED DESCRIPTION

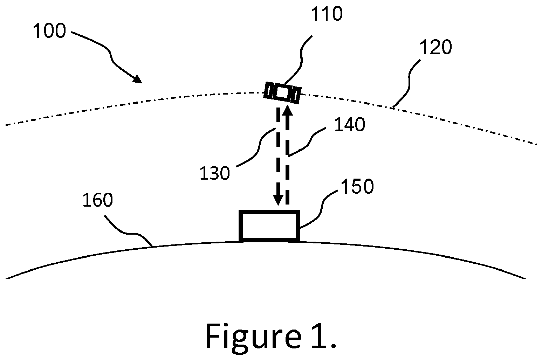

Figure 1 shows a schematic of a space-to-ground, ground-to space-optical communications link. It will be appreciated by the skilled person that the ground-to-space arrangement is simply an inversion of the space-to-ground arrangement discussed herein. The skilled person will further appreciate that this system may also be applied in space-to-space and ground-to-ground communication using substantially similar apparatuses and methods as are disclosed herein.

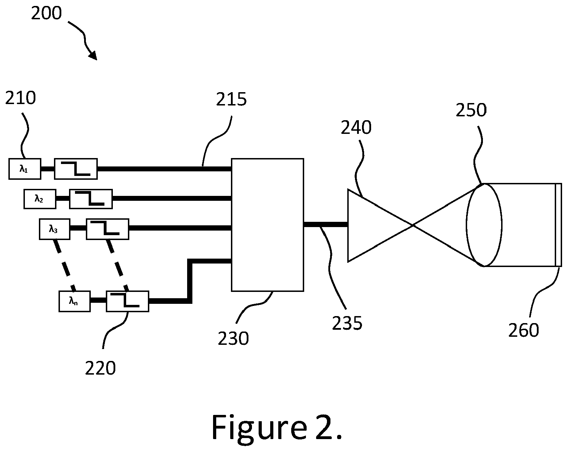

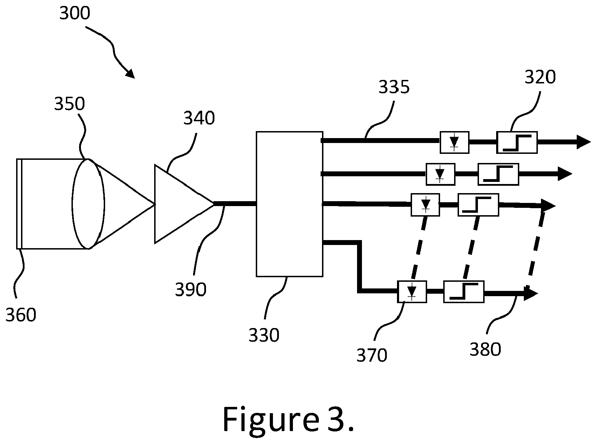

An optical communication system 100 comprises a transmitter 200 and a receiver 300, such as those described in relation to figures 2 and 3. The transmitter 200 is configured to transmit an optical signal 130 to a receiver 300.

The system 100 may include a transmitter 200 coupled to a satellite 110 located in an orbit 120 above the ground 160. The satellite 110 may occupy one of a geostationary; polar; low-Earth, medium-Earth, Sun-synchronous, transfer, Lissajous, halo orbit, or the like. The system 100 may further include a receiver coupled to a ground station 150. The ground station 150 may be in a fixed location or mobile, located either on or above the ground 160. The ground station 150 may be located below ground level, for example, below the surface of a body of water. The transmitter 200 may transmit an optical signal 130 to the receiver 300 through free space. It will be appreciated that this operation may be performed in reverse, whereby a transmitter 200 may be configured to transmit a signal 140 from a ground station 150 comprising a transmitter 200 to a satellite 110 comprising a receiver 300. The satellite 110 and the ground station 150 may comprise both a transmitter 200 and a receiver 300 to permit two-way communication.

In another example, a further satellite (not shown) may be configured to communicate with satellite 110 via an optical signal. Satellite 110 may be configured to receive and re-transmit the received optical signal to a ground station 150 using the apparatuses and methods disclosed herein. This configuration may be applicable in situations where the first satellite lacks a clear line of sight to the ground station 150. Each of the satellites may comprise both a transmitter 200 and a receiver 300 to permit two-way communication.

The transmitter 200 or satellite 110 may point towards and track the ground station 150 during orbit 120 to ensure that a stable communications link is maintained. Similarly, the receiver 300 or ground station 150 may comprise a telescope configured to track the orbiting satellite 110 and collect the maximum amount of signal.

Figure 2 is a block diagram of a transmitter 200 configured to transmit an optical signal. The transmitter 200 may be coupled to a satellite 110 and configured to transmit an optical signal 130 to a ground station 150. Alternatively, the transmitter 200 may be coupled to a ground station 150 and configured to transmit an optical signal 140 to a satellite 110.

The transmitter 200 comprises an optical signal generator 210 configured to generate at least one optical signal 215. In cases where there is more than one optical signal 215-1, 215-2... 215-n generated, each optical signal 215 may comprise a different wavelength λ_{1,} λ_{2...} λₙ , wherein each wavelength λ_{1,} λ_{2...} λₙ is separated by an appropriate amount to prevent crosstalk or unwanted interference. The optical signal generator 210 may be a laser generator configured to generate at least one laser signal. In cases where there is more than one laser signals generated, each laser signal may comprise a different wavelength λ_{1,} λ_{2...} λₙ, wherein each wavelength λ_{1,} λ_{2...} λₙ is separated by an appropriate bandwidth to prevent crosstalk or unwanted interference. The at least one laser signal may be an infrared laser signal with a wavelength substantially between 700 nm to 10 µm. The transmitter 200 may comprise multiple optical signal generators 210-1, 210-2... 210-n configured to provide optical signals 215-1, 215-2... 215-n corresponding to different wavelengths or different wavelength ranges. The wavelengths λ_{1,} λ_{2...} λₙ used may be based on a number of factors, including wavelength range, stability, power, coherence length, amplifier wavelength range, and the like.

The transmitter 200 further includes a modulator 220 configured to encode data onto the generated at least one optical signal. The modulation format may be an on-off keying format wherein the power of the at least one optical signal is blocked or allowed to pass to present a 0 or a 1, or vice versa. Those skilled in the art will appreciate that this is one example of a modulation technique and that various other techniques be employed to achieve the same or a substantially similar result. Other such examples may include pulse position modulation and phase modulation. Modulation may be applied to the least one optical signal directly, for example, by modulating the current of the at least one optical signal generator. Alternatively, modulation may be applied to the at least one optical signal indirectly, for example, by transmission through an opto-electronic element such as a lithium niobate interferometer. The combination of the at least one optical generator and modulator provides opto-electronic conversion. The transmitter 200 may comprise multiple modulators 220-1, 220-2... 220-n configured to modulate multiple optical signals 215-1, 215-2... 215-n corresponding to different wavelengths λ_{1,} λ_{2...} λₙ, or different wavelength ranges.

The transmitter 200 further includes a multiplexer 230, configured to combine the at least one optical signal 215 into a multiplexed optical signal 235. The multiplexer may achieve this by combining the individual optical signals contained in a series of individual fibre optic cables or through free space, combining these signals 215-1, 215-2... 215-n into a single co-linear beam. The multiplexer 230 may be non-diffractive, for example, a fibre coupler. The multiplexer 230 may be diffractive, for example, an arrayed waveguide grating. The use of a diffractive multiplexer is preferable since this approach reduces the loss of signal power.

The transmitter 200 may further include at least one power amplifier 240 configured to amplify the optical power of all the wavelengths combined within the multiplexed optical signal 235. This improves the power budget and reliability of a good link being formed, for example, by increasing the possible data rate in each channel or overcoming atmospheric losses. The power amplifier 240 may be an Erbium-Doped Fibre Amplifier (EDFA) or Ytterbium-Doped Fibre Amplifier (YDFA). Those skilled in the art will appreciate that another type of suitable amplifier may be employed to achieve the same or a substantially similar result. The suitability of an amplifier may depend on the specific wavelengths λ_{1,} λ_{2...} λₙ of the at least one optical signal 215 generated by the optical signal generator 210. An EDFA may have a bandwidth of at least 30 nm, thereby allowing many channels to be simultaneously amplified. Alternatively, the power amplifier 240 may be a non-fibre amplifier.

The transmitter 200 may further include at least one optical element 250. The at least one optical element 250 may comprise a lens, or a series of lenses, however, those skilled in the art will appreciate that various other optical elements may be employed to achieve the same or a substantially similar result. The optical element 250 is configured to condition and direct the multiplexed optical signal 235 such that the signal is directed toward the receiver 300 or ground station 150. Said optical elements 250 may direct the multiplexed optical signal 235 mechanically, for example, by the manipulation of mirrors. The multiplexed optical signal 235 may be directed through direct manipulation of the satellite 110 and its orientation in space. The at least one optical element 250 may further ensure that the multiplexed optical signal has a low divergence. Ideally, the divergence of the multiplexed optical signal 235 will be sufficiently small such that as much light as possible is collected by the receiver 300 or ground station 150.

The transmitter 200 may further include a window 260 configured to protect the apparatus from the external environment.

The at least one optical signal 215 and multiplexed optical signal 235 may be communicated between components of the transmitter 200 with optical fibres to make alignment of the components simpler. The at least one optical signal 215 and multiplexed optical signal 235 may alternatively be communicated between components of the transmitter 200 via free space optics.

Figure 3 is a block diagram of a receiver 300 configured to receive an optical signal. The receiver 300 may be coupled to an optical ground station 150 and configured to receive an optical signal 130 transmitted by a transmitter 200. Alternatively, the receiver 300 may be coupled to a satellite 110 and configured to receive an optical signal 140 from a transmitter 200 coupled to a ground station 150.

The receiver 300 further includes a de-multiplexer 330, configured to separate the multiplexed optical signal 390 into at least one optical signal 335. The de-multiplexer may achieve this by separating the individual optical signals into a series of individual fibre optic cables or free space. The de-multiplexer 330 may be non-diffractive, for example, a fibre coupler. Non-diffractive separation means may require the use of filtering to ensure correct separation of each of the different wavelengths λ_{1,} λ_{2...} λₙ. The de-multiplexer 330 may be diffractive, for example, an arrayed waveguide grating. The use of a diffractive multiplexer is preferable since this approach reduces the loss of signal power.

The receiver 300 further includes an opto-electronic converter 370 configured to convert the at least one optical signal 335 into at least one electronic signal. The opto-electronic converter may be a photodiode or photomultiplier tube. Those skilled in the art will appreciate that various other components may be employed to achieve the same or a substantially similar result. The receiver 300 may comprise multiple opto-electronic convertors 370-1, 370-2... 370-n configured to convert separated optical signals 335 at different wavelengths λ_{1,} λ_{2...} λₙ, or different wavelength ranges.

The receiver 300 further includes a de-modulator 320 configured to demodulate the at least one converted optical signal into at least one data output signal 380. The de-modulator 320 may decode the at least one converted signal to allow onward digital processing of the data or information included therein. The receiver 300 may comprise multiple de-modulators 320-1, 320-2...320-n configured to de-modulate electrical signals obtained from different wavelengths λ_{1,} λ_{2...} λₙ, or different wavelength ranges. The multiple de-modulators may be configured to de-modulate the electrical signals to provide multiple data output signals 380-1, 380-2... 380-n.

The receiver 300 may further include at least one optical element 350. The at least one optical element 350 may comprise a lens or a series of lenses. Those skilled in the art will appreciate that various other optical elements may be employed to achieve the same or a substantially similar result. The optical element 350 is configured to collect the multiplexed optical signal 235 light and condition it such that it is incident with the right geometry for downstream components. The at least one optical element 350 may further adjust the field of view of the receiver 350 such that it is directed towards the transmitter 200. This may be achieved by mechanical means, such as directly pointing the at least one optical element 350 towards the transmitter 200 or satellite 110. The at least one optical element may comprise a telescope or arrangement of at least one mirror. The at least one optical element 350 may be configured to have a narrow field of view to reduce the amount of background light collected that would otherwise increase noise in the system. The at least one optical element 350 may be further configured to improve focussing of the received signal and reduce signal loss.

The receiver 300 may further include at least one pre-amplifier 340 configured to amplify the optical power of the received multiplexed optical signal 390. The pre-amplifier may increase the power across all the wavelengths comprised by the multiplexed optical signal 390. Amplification of this signal improves the power budget to achieve a higher signal-to-noise ratio may increase the possible data reach and data rate in each channel and may compensate for atmospheric losses. The pre-amplifier 340 may be an Erbium-Doped Fibre Amplifier (EDFA) or Ytterbium-Doped Fibre Amplifier (YDFA). An EDFA may have a bandwidth in excess of 30 nm allowing many channels to be simultaneously amplified. Those skilled in the art will appreciate that another type of suitable amplifier may be employed to achieve the same or a substantially similar result. Alternatively, the power amplifier 340 may be a non-fibre amplifier.

The receiver may further include at least one filter element configured to filter light according to a specific wavelength λ_{1,} λ_{2...} λₙ or wavelength band. The filter element may be configured to prevent crosstalk or interference between the de-multiplexed configured at least one optical signal.

The receiver 300 may further include a window configured to protect the system from the external environment.

The at least one optical signal 335 and multiplexed optical signal 390 may be communicated between components of the receiver 300 with optical fibres to make alignment of the components simpler. The at least one optical signal 390 and multiplexed optical signal 335 may alternatively be communicated between components of the receiver 300 via free space optics.

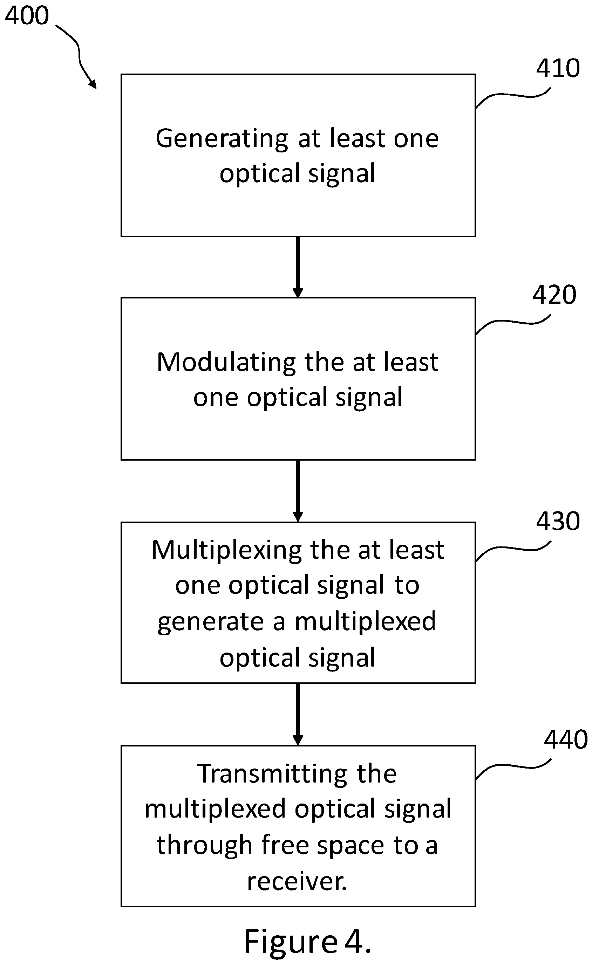

Figure 4 shows a block diagram illustrating a method 400 of transmitting an optical signal. The transmission of a signal may be achieved using a transmitter 200. The signal may be transmitted from a transmitter 200 to a receiver 300. The transmitter 200 may be coupled to a satellite 110, and the receiver 300 may be coupled to a ground station 150. The transmitted signal may pass through free space between the transmitter 200 and the receiver 300. Those skilled in the art will appreciate that this arrangement may be reversed to allow ground-to-space communication.

The method 400 comprises the step of generating at least one optical signal 410. In cases where there is more than one optical signal 215-1, 215-2... 215-n is generated, each optical signal 215 may comprise a different wavelength λ_{1,} λ_{2...} λₙ, wherein each wavelength λ_{1,} λ_{2...} λₙ is separated by an appropriate bandwidth to prevent crosstalk or unwanted interference. Generation of the optical signal may be achieved using an optical signal generator 210. The optical signal generator 210 may be a laser generator configured to generate at least one laser signal. In cases where there is more than one laser signal generated, each laser signal may comprise a different wavelength λ_{1,} λ_{2...} λₙ, wherein each wavelength λ_{1,} λ_{2...} λₙ is separated by an appropriate bandwidth to prevent crosstalk or unwanted interference. The at least one laser signal may be an infrared laser signal with a wavelength substantially between 700 nm to 10 µm. Multiple optical signal generators 210-1, 210-2... 210-n may be configured to provide optical signals 215-1, 215-2... 215-n with different wavelengths λ_{1,} λ_{2...} λₙ or different wavelength ranges. The wavelengths used may be based on a number of factors, including wavelength range, stability, power, coherence length, coherence time, and the like. The at least one laser signal may have a wavelength between 700 nm and 10 µm.

The method 400 further comprises the step of modulating the at least one optical signal 420. The modulation applied may be one of an on-off keying format wherein the power of the at least one optical signal is blocked or allowed to pass to present a 0 or a 1, or vice versa. Those skilled in the art will appreciate that this is one example of a modulation technique and that various other techniques be employed to achieve the same or a substantially similar result. Other such examples may include pulse position modulation and phase modulation. Modulation may be applied directly to the least one optical signal directly, for example, by modulating the current of the at least one optical signal generator. Modulation may be applied to the at least one optical signal indirectly, for example, by transmission through an opto-electronic element such as a lithium niobate interferometer. The combination of the at least one optical generator and modulator provides opto-electronic conversion. The optical signal generator and modulator 220 may be encompassed in a single device configured to produce at least one modulated optical signal 215. Modulation may be performed using multiple modulators 220-1, 220-2... 220-n configured to modulate multiple optical signals 215-1, 215-2... 215-n corresponding to different wavelengths λ_{1,} λ_{2...} λₙ, or different wavelength ranges.

The method 400 further comprises the step of multiplexing the at least one optical signal to generate a multiplexed optical signal 430. Multiplexing involves combining the at least one optical signal 215 into a multiplexed optical signal 235. This may be achieved by combining the individual optical signals contained in a series of individual fibre optic cables or in free space, combining these signals 215-1, 215-2... 215-n into a single co-linear beam. Multiplexing may be achieved using non-diffractive means, for example, by using a fibre coupler. Alternatively, multiplexing may be achieved using diffractive means, for example, by using an arrayed waveguide grating. The use of a diffractive multiplexer is preferable since this approach reduces the loss of signal power.

The method 400 further comprises the step of transmitting the multiplexed optical signal through free space to a receiver 440. The free space may exist between a satellite 110 and a ground station 150, a first satellite and a second satellite, a ground station and a satellite, or a first ground station and a second ground station.

The method 400 may further comprise the step of conditioning and directing the multiplexed optical signal. This may be achieved using at least one optical element 250. The at least one optical element 250 may comprise a lens or a series of lenses. Those skilled in the art will appreciate that various other optical elements may be employed to achieve the same or a substantially similar result. This step may condition and direct the multiplexed optical signal 235 such that the signal is directed to a receiver 300 or ground station 150. This process of conditioning and directing the multiplexed optical signal 235 may ensure that the signal has a low divergence. Ideally, the divergence of the multiplexed optical signal 235 will be sufficiently small such that as much light as possible is collected by the receiver 300 or ground station 150.

The method 400 may further comprise the step of amplifying the power of the multiplexed optical signal 235. Amplification may be applied to all the wavelengths combined in the multiplexed optical signal 235. Amplification may be applied to each wavelength λ_{1,} λ_{2...} λₙ separately. Amplification may improve the power budget and reliability of a good link being formed, for example, by increasing the possible data rate in each channel or overcoming atmospheric losses. Amplification may be performed using an Erbium-Doped Fibre Amplifier (EDFA) or Ytterbium-Doped Fibre Amplifier (YDFA). Those skilled in the art will appreciate that another type of suitable amplifier may be employed to achieve the same or a substantially similar result. The suitability of an amplifier may depend on the specific wavelengths of the at least one optical signal 215 generated by the optical signal generator 210. An EDFA may have a bandwidth in excess of 30 nm allowing many channels to be simultaneously amplified. Alternatively, the amplification may be achieved using a non-fibre amplifier.

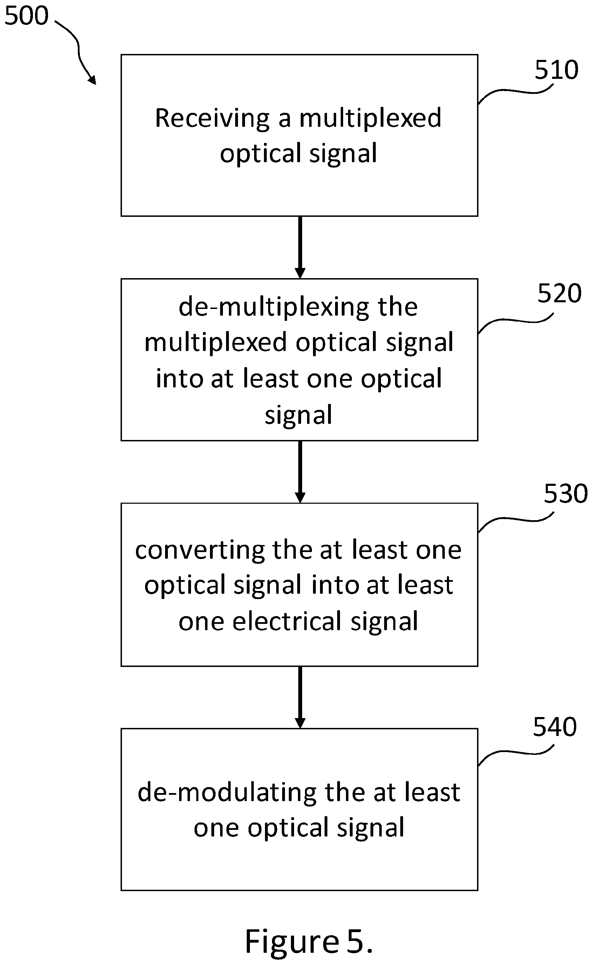

Figure 5 shows a block diagram illustrating a method 500 of receiving an optical signal. The method 500 comprises the step of receiving 510 a multiplexed optical signal 390. Receiving of the multiplexed optical signal 390 may be achieved using a receiver 300. The multiplexed optical signal 390 may be received by a receiver 300 after being transmitted by a transmitter 200. The receiver 300 may be coupled to a ground station 150 satellite 110, and the transmitter 200 may be coupled to a satellite 110. The transmitted signal may pass through free space between the transmitter 200 and the receiver 300. The multiplexed optical signal 390 may pass through free space between the transmitter 200 and the receiver 300. Those skilled in the art will appreciate that this arrangement may be reversed to allow ground-to-space communication.

The method 500 further comprises the step of de-multiplexing 520 the multiplexed optical signal 390 into at least one optical signal 335. De-multiplexing involves separating the multiplexed optical signal 390 into separate optical signals 335-1, 335-2... 335-n. This may be achieved by separating at least one optical signal 335 into a series of individual fibre optic cables or free space. De-multiplexing may be achieved using non-diffractive means, for example, by using a fibre coupler. Alternatively, de-multiplexing may be achieved using diffractive means, for example, by using an arrayed waveguide grating. The use of a diffractive multiplexer is preferable since this approach reduces the loss of signal power.

The method 500 further comprises the step of converting 530 the at least one optical signal 335 into at least one electrical signal. Conversion of the at least one optical signal 335 into at least one electrical signal may be performed by an opto-electronic converter 370. The opto-electronic converter may be a photodiode or photomultiplier tube. Those skilled in the art will appreciate that various other components may be employed to achieve the same or a substantially similar result. Multiple opto-electronic convertors 370-1, 370-2... 370-n may be configured to convert the at least one optical signal 335 at different wavelengths λ_{1,} λ_{2...} λₙ, or different wavelength ranges.

The method 500 further comprises de-modulating 540 the at least one electrical signal. De-modulation may be performed using a de-modulator 320. De-modulation may involve decoding the at least one electrical signal to allow onward digital processing of the data or information included therein. Multiple de-modulators 320-1, 320-2... 320-n may be configured to de-modulate electrical signals obtained from different wavelengths λ_{1,} λ_{2...} λₙ, or different wavelength ranges. The multiple de-modulators may be configured to de-modulate the electrical signals to provide multiple data output signals 380-1, 380-2... 380-n.

The method 500 may further comprise the step of focusing the received multiplexed optical signal 390. This may be achieved using at least one optical element 350. The at least one optical element 350 may comprise a lens or a series of lenses. Those skilled in the art will appreciate that various other optical elements may be employed to achieve the same or a substantially similar result. This step may focus the received multiplexed optical signal 390 such that the signal is incident with the right geometry for downstream components. The at least one optical element 350 may adjust the field of view of the receiver 300 such that it is directed towards the transmitter 200. The at least one optical element 350 may be configured to have a narrow field of view to reduce the amount of background light collected that will increase noise in the system.

The method 500 may further comprise the step of amplifying the received multiplexed optical signal 390. This amplification may be applied to all the wavelengths combined in the multiplexed optical signal 390. Amplification improves the power budget and reliability of a good link being formed, for example, by increasing the possible data rate in each channel or overcoming atmospheric losses. Amplification may be performed using an Erbium-Doped Fibre Amplifier (EDFA) or Ytterbium-Doped Fibre Amplifier (YDFA). Those skilled in the art will appreciate that another type of suitable amplifier may be employed to achieve the same or a substantially similar result. The suitability of an amplifier may depend on the specific wavelengths of the at least one optical signal 215 generated by the optical signal generator 210 of the transmitter 200. An EDFA may have a bandwidth in excess of 30 nm allowing many channels to be simultaneously amplified. Alternatively, the amplification may be achieved using a non-fibre amplifier.

The method 500 may further comprise the step of filtering the at least one optical signal using an optical filter. The optical filter element may be configured to filter light according to a specific wavelength λ_{1,} λ_{2...} λₙ or wavelength band. The filter element may be configured to prevent crosstalk or interference between the de-multiplexed configured at least one optical signal.

The methods 400, 500 described above for transmitting and receiving an optical signal may also be applied between a first satellite and a second satellite. The second satellite may be an intermediary satellite configured to re-transmit the received optical signal to a ground station 150. This configuration may be applicable in situations where the first satellite lacks a clear line of sight to the ground station.

The apparatuses, systems, and methods described herein have the capability to increase the capacity available in space-to-ground, ground-to-space, and space-to-space optical communications links by multiplying the capacity in an individual link by the number of wavelength channels used. This can mitigate, for example, when a communication link fades due to atmospheric conditions. This may result in reduced information quality due to constrained bandwidth, or even build resilience because the link is less likely to fail if one laser fails.

Reference in the specification to "an example" or similar language means that a particular feature, structure, or characteristic described in connection with the example is included in at least one example, but not necessarily in other examples. The various instances of the phrase "in one example" or similar phrases in various places in the specification are not necessarily all referring to the same example.

In describing and claiming the examples disclosed herein, the singular forms "a", "an", and "the" include plural referents unless the context clearly dictates otherwise.

While several examples have been described in detail, it is to be understood that the disclosed examples may be modified. Therefore, the foregoing description is to be considered non-limiting. It should be understood that the examples described herein should be considered in a descriptive sense only and not for purposes of limitation. Descriptions of features or aspects within each example should typically be considered as available for other similar features or aspects in other examples. While one or more examples have been described with reference to the figures, it will be understood by those of ordinary skill in the art that various changes in form and details may be made.

## Claims

1. An apparatus for transmitting an optical signal, comprising:
an optical signal generator, configured to generate at least one optical signal;
a modulator, configured to encode data onto the at least one optical signal; and
a multiplexer, configured to combine the at least one optical signal into a multiplexed optical signal.

2. The apparatus according to claim 1, further comprising at least one optical element configured to condition and direct the multiplexed optical signal.

3. The apparatus according to claims 1 or 2, further comprising an amplifier configured to amplify the multiplexed optical signal.

4. An apparatus for receiving an optical signal, comprising:
a de-multiplexer, configured to separate the multiplexed optical signal into at least one optical signal;
an opto-electronic element, configured to convert the at least one optical signal into at least one electrical signal; and
a de-modulator, configured to decode the at least one electrical signal.

5. The apparatus according to claim 4, further comprising at least one optical element configured to focus the received multiplexed optical signal.

6. The apparatus according to claims 4 or 5, further comprising at least one amplifier configured to amplify the received multiplexed optical signal.

7. The apparatus according to any one of claims 4-6, further comprising at least one optical filter.

8. The apparatus of either of claims 1 or 4, wherein the at least one optical signal is transferred between components via fibre optic.

9. The apparatus of either of claims 1 or 4, wherein the at least one optical signal is transferred between components via free space.

10. The apparatus any preceding claim, wherein the at least one optical signal is an infrared laser signal with a wavelength substantially between 700 nm to 10 µm.

11. A system comprising the transmitter apparatus of claim 1 and receiver apparatus of claim 4, wherein the multiplexed optical signal is transmitted from the transmitter to the receiver through free space.

12. The system of claim 11, wherein the satellite and ground station each comprises a transmitter and receiver.

13. The system of claim 11, wherein the transmitter is coupled to a first satellite in an orbit, and the receiver is coupled to a second satellite in an orbit, wherein the first satellite is configured to transmit a multiplexed optical signal to the second satellite.

14. A method of transmitting an optical signal, comprising:
generating at least one optical signal;
modulating the at least one optical signal;
multiplexing the at least one optical signal to generate a multiplexed optical signal; and
transmitting the multiplexed optical signal through free space to a receiver.

15. A method of receiving an optical signal, comprising:
receiving a multiplexed optical signal;
de-multiplexing the multiplexed optical signal into at least one optical signal;
converting the at least one optical signal into at least one electrical signal; and
de-modulating the at least one electrical signal.
